# EUROPEAN PATENT SPECIFICATION

(11) **EP 3 338 396 B1**
(45) Date of publication and mention of the grant of the patent: **22.09.2021**
(21) Application number: 16837932.9
(22) Date of filing: 19.08.2016
(51) Int. Cl.: H04L 12/803, H04L 29/06, H04L 1/16, H04L 29/08

(54) **DEVICE AND METHOD FOR ESTABLISHING CONNECTION IN LOAD-BALANCING SYSTEM**
VORRICHTUNG UND VERFAHREN ZUR HERSTELLUNG EINER VERBINDUNG IN EINEM LASTAUSGLEICHSSYSTEM
DISPOSITIF ET PROCÉDÉ D'ÉTABLISSEMENT DE CONNEXION DANS UN SYSTÈME D'ÉQUILIBRAGE DE CHARGE

(30) Priority: 20.08.2015 CN 201510516359
(43) Date of publication of application: 27.06.2018
(73) Proprietor: Alibaba Group Holding Limited, Grand Cayman (KY)
(72) Inventor: XUE, Bengbeng, Hangzhou 311121 (CN); WU, Jiaming, Hangzhou 311121 (CN); LI, Yi, Hangzhou 311121 (CN)
(74) Representative: Finnegan Europe LLP
(86) International application number: PCT/US2016/047876
(87) International publication number: WO 2017/031460

(56) References cited:
- US-A1- 2003 014 650
- US-A1- 2008 104 262
- US-A1- 2014 330 977
- US-A1- 2015 189 010
- US-B1- 6 587 438
- US-B1- 7 921 282
- US-B1- 8 341 295
- US-B1- 9 027 129
- US-B2- 7 058 718

## Description

### TECHNICAL FIELD

The present disclosure generally relates to the field of communication technology, and more particularly, to a device and method for establishing connection in a load-balancing system.

### BACKGROUND

Balancing the loads of servers is a technique in which a load-balancing device re-directs flows of client visits to several back-end servers to evenly distribute the visits to the back-end servers.

Because a load-balancing system includes a load-balancing device, service-request packets from the client devices (clients) need to be re-directed by the load-balancing device to the back-end servers (e.g., real servers) that handles the service-request packets. This changes the processing flow of the packets. In a related load-balancing system, a processing flow of the packets includes the forwarding of request packets by a client to a load-balancing device, which then forwards the client request packet to a real server. The real server then forwards a response packet directly to the client.

Before forwarding the client request packet, a connection based on Transmission Control Protocol (TCP) between the client and the real server needs to be established. In the related art, to establish a TCP connection, a three-way handshake needs to be performed according to the TCP. Establishing a TCP connection in the above load-balancing system includes the following steps:

The client forwards a synchronous (SYN) packet to the load-balancing device. An option field of the SYN packet includes the client connection information.

The load-balancing device forwards the SYN packet to the real server. The real server creates a database to store the client connection information and establishes a half-open connection with the client.

The real server returns a synchronous acknowledgement (SYN+ACK) packet to the client. The SYN+ACK packet includes connection information of the real server.

The client forwards an acknowledgement (ACK) packet to load-balancing device.

The load-balancing device forwards the ACK packet to the real server.

When the real server receives the ACK packet, it converts the half-open TCP connection to full TCP connection with the client.

However, an attacker may use the protocol flaws to attack the TCP connection while the TCP connection is being established. If the attacker sends a lot of SYN packets to the real server, the server would need to create a very large database and diverts a lot of system resources to establish half-open TCP connections, resulting in legitimate requests not being handled, which affects the normal services provided by the real server.

US 9,027,129 B1 relates to techniques for protecting against Denial of Service (DoS) attacks. US 9,027,129 B1 discloses a network device that can extract value(s) that have TCP option information encoded therein from a TCP ACK packet sent by a client device, decode the values to determine the TCP option information, embed the TCP option information into the TCP ACK packet, and forward such a TCP ACK packet with the embedded TCP option information to a server.

### SUMMARY

The invention is set-out in the appended claims. There is provided an apparatus for establishing a connection in a load-balancing system as recited in claim 1, a computer-implemented method for establishing a connection in a load-balancing system as recited in claim 7, and a non-transitory computer readable medium as recited in claim 13.

Consistent with embodiments of the present disclosure, there is provided an apparatus for establishing a connection in a load-balancing system. The apparatus is coupled between a client device and a real server that provides services to the client device. The apparatus includes: a memory device storing instructions; and a processor configured to execute the instructions stored in the memory device to: receive a synchronous (SYN) packet from the client device, the SYN packet including client connection information; based on the client connection information, compute a serial number; return a first synchronous acknowledgement (SYN+ACK) packet to the client device, the serial number being assigned to be a serial number of the first SYN+ACK packet, the first SYN+ACK packet including connection information of the real server; receive an acknowledgement (ACK) packet from the client and compute to obtain the client connection information based on a confirmation number of the ACK packet; generate a self-defined packet to include the client connection information; and forward the self-defined packet to the real server so that the real server extracts the client connection information from the self-defined packet and establishes a Transmission Control Protocol (TCP) connection with the client device based on the client connection information.

Consistent with embodiments of the present disclosure, there is provided a non-transitory computer readable medium that stores a set of instructions that is executable by at least one processor of a device to cause the device to perform a method. The method includes: receiving a synchronous (SYN) packet from the client device, the SYN packet including client connection information; based on the client connection information, computing a serial number; returning a first synchronous acknowledgement (SYN+ACK) packet to the client device, the serial number being assigned to be a serial number of the first SYN+ACK packet, the first SYN+ACK packet including connection information of the real server; receiving an acknowledgement (ACK) packet from the client and computing to obtain the client connection information based on a confirmation number of the ACK packet; generating a self-defined packet to include the client connection information; and forwarding the self-defined packet to the real server so that the real server extracts the client connection information from the self-defined packet and establishes a Transmission Control Protocol (TCP) connection with the client device based on the client connection information.

Consistent with embodiments of the present disclosure, there is provided a method for establishing a connection in a load-balancing system. The method is performed by a load-balancing device coupled between a client device and a real server that provides services to the client device. The method includes: receiving a synchronous (SYN) packet from the client device, the SYN packet including client connection information; based on the client connection information, computing a serial number; returning a first synchronous acknowledgement (SYN+ACK) packet to the client device, the serial number being assigned to be a serial number of the first SYN+ACK packet, the first SYN+ACK packet including connection information of the real server; receiving an acknowledgement (ACK) packet from the client and computing to obtain the client connection information based on a confirmation number of the ACK packet; generating a self-defined packet to include the client connection information; and forwarding the self-defined packet to the real server so that the real server extracts the client connection information from the self-defined packet and establishes a Transmission Control Protocol (TCP) connection with the client device based on the client connection information.

Consistent with embodiments of the present disclosure, there is provided a method for establishing a connection in a load-balancing system. The method is performed by a client device coupled to a load-balancing device and a real server that provides services to the client device. The method includes: forwarding a synchronous (SYN) packet to the load-balancing device, the SYN packet including client connection information; receiving a synchronous acknowledgement (SYN+ACK) packet returned from the load-balancing device, wherein a serial number of the SYN+ACK packet is obtained by the load-balancing device performing computation based on the client connection information included in the SYN packet, the SYN+ACK packet including connection information of the real server; and forwarding an acknowledgement (ACK) packet to the load-balancing device so that the load-balancing device performs computation to obtain the client connection information based on a confirmation number of the ACK packet, generates a self-defined packet to include the client connection information, and forwards the self-defined packet to the real server such that the real server extracts the client connection information from the self-defined packet and establishes a Transmission Control Protocol connection with the client device based on the client connection information.

Consistent with embodiments of the present disclosure, there is provided a method for establishing a connection in a load-balancing system. The method is performed by a real server coupled to a load-balancing device and a client device. The real server is configured to provide services to the client device. The method includes: receiving a self-defined packet transmitted from the load-balancing device, wherein the self-defined packet is generated by a process in which the load-balancing device receives a synchronous (SYN) packet transmitted from the client device, computes a serial number based on client connection information included in the SYN packet, assigns the serial number to a synchronous acknowledgement (SYN+ACK) packet that includes connection information of real server, receives an acknowledgement (ACK) packet from the client device, performs computation to obtain the client connection information based on a confirmation number of the ACK packet, and generates the self-defined packet to include the client connection information; extracting the client connection information from the self-defined packet; and establishing a Transmission Control Protocol connection with the client device based on the client connection information.

Consistent with embodiments of the present disclosure, there is provided an apparatus for establishing a connection in a load-balancing system. The apparatus is coupled between a client device and a real server that provides services to the client device. The apparatus includes: a first receiving module configured to receive a synchronous (SYN) packet from the client device, the SYN packet including client connection information; a computing module configured to, based on the client connection information, compute a serial number; a first responding module configured to return a first synchronous acknowledgement (SYN+ACK) packet to the client device, the serial number being assigned to be a serial number of the first SYN+ACK packet, the first SYN+ACK packet including connection information of the real server; a second receiving module configured to receive an acknowledgement (ACK) packet from the client and compute to obtain the client connection information based on a confirmation number of the ACK packet; a generating module configured to generate a self-defined packet to include the client connection information; and a first forwarding module configured to forward the self-defined packet to the real server so that the real server extracts the client connection information from the self-defined packet and establishes a Transmission Control Protocol (TCP) connection with the client device based on the client connection information.

Consistent with embodiments of the present disclosure, there is provided an apparatus for establishing a connection in a load-balancing system. The apparatus is coupled to a load-balancing device and a real server that provides services to the apparatus. The apparatus includes: a second forwarding module configured to forward a synchronous (SYN) packet to the load-balancing device, the SYN packet including client connection information; a third receiving module configured to receive a synchronous acknowledgement (SYN+ACK) packet returned from the load-balancing device, wherein a serial number of the SYN+ACK packet is obtained by the load-balancing device performing computation based on the client connection information included in the SYN packet, the SYN+ACK packet including connection information of the real server; and a second responding module configured to forward an acknowledgement (ACK) packet to the load-balancing device so that the load-balancing device performs computation to obtain the client connection information based on a confirmation number of the ACK packet, generates a self-defined packet to include the client connection information, and forwards the self-defined packet to the real server such that the real server extracts the client connection information from the self-defined packet and establishes a Transmission Control Protocol connection with the apparatus based on the client connection information.

Consistent with embodiments of the present disclosure, there is provided an apparatus for establishing a connection in a load-balancing system. The apparatus is coupled to a load-balancing device and a client device, the apparatus being configured to provide services to the client device. The apparatus includes: a fourth receiving module configured to receive a self-defined packet transmitted from the load-balancing device, wherein the self-defined packet is generated by a process in which the load-balancing device receives a synchronous (SYN) packet transmitted from the client device, computes a serial number based on client connection information included in the SYN packet, assigns the serial number to a synchronous acknowledgement (SYN+ACK) packet that includes connection information of the apparatus, receives an acknowledgement (ACK) packet from the client device, performs computation to obtain the client connection information based on a confirmation number of the ACK packet, and generates the self-defined packet to include the client connection information; an extracting module configured to extract the client connection information from the self-defined packet; and a connection establishment module configured to establish a Transmission Control Protocol connection with the client device based on the client connection information.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for establishing a connection in a load-balancing system, consistent with embodiments of the present disclosure.
Fig. 2 is a flow chart illustrating another method for establishing a connection in a load-balancing system, consistent with embodiments of the present disclosure.
Fig. 3 is a flow chart illustrating another method for establishing a connection in a load-balancing system, consistent with embodiments of the present disclosure.
Fig. 4A is block diagram illustrating an exemplary load-balancing device consistent with embodiments of present disclosure.
Fig. 4B is block diagram illustrating the forwarding module as shown in Fig. 4A, consistent with embodiments of present disclosure.
Fig. 4C is block diagram illustrating the second receiving module as shown in Fig. 4A, consistent with embodiments of present disclosure.
Fig. 5 is a block diagram of an exemplary client device of a load-balancing system, consistent with embodiments of the present disclosure.
Fig. 6 is a block diagram of an exemplary real server of a load-balancing system, consistent with embodiments of the present disclosure.
Fig. 7 is a block diagram an exemplary load-balancing system, consistent with embodiments of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

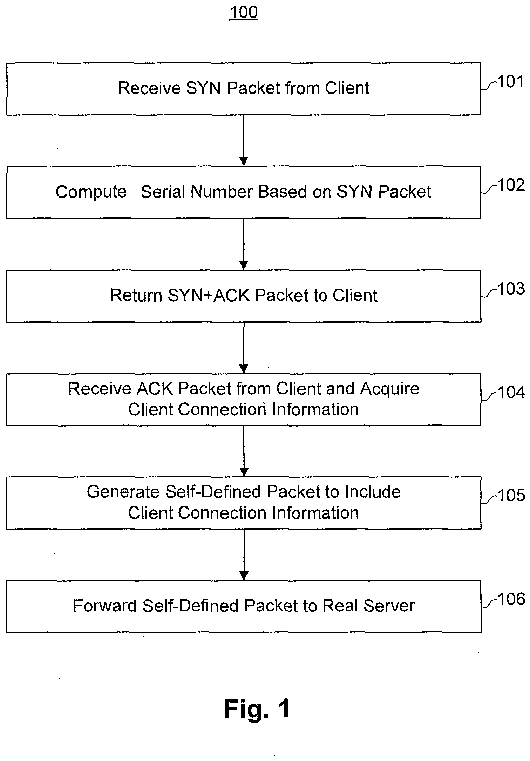

Fig. 1 is a flow chart illustrating a method 100 for establishing a connection in a load-balancing system, consistent with embodiments of the present disclosure. The method 100 may be performed by a load-balancing device in the load-balancing system. Referring to Fig. 1, the method 100 includes the following steps:

In step 101, the load-balancing device receives an SYN packet from a client. The SYN packet includes the client connection information. Consistent with embodiments of the present disclosure, the client connection information may be used to connect to the client.

In step 102, the load-balancing device computes a serial number based on the SYN packet received from the client.

In step 103, the load-balancing device returns an SYN+ACK packet to the client, and assigns the serial number to the SYN+ACK packet. In some embodiments, the SYN+ACK packet may include connection information of a real server. Consistent with embodiments of the present disclosure, the connection information of the real server may be used to connect to the real server.

In step 104, the load-balancing device receives an ACK packet from the client and, based on a confirmation number included in the ACK packet, acquires the client connection information.

In one embodiment, the confirmation number may be the serial number plus a number, such as one. The load-balancing device may perform a simple calculation of subtracting one from the confirmation number to obtain the serial number. Based on the serial number, the load-balancing device may determine the client connection information.

In step 105, the load-balancing device generates a self-defined packet to include the client connection information.

In step 106, the load-balancing device forwards the self-defined packet to the real server so that the real server may extract the client connection information from the self-defined packet and establish a TCP connection with the client.

In the illustrated embodiment, the load-balancing device uses the client connection information included in the SYN packet to compute the serial number, and assigns the serial number to the SYN+ACK packet, so that the real server does not need to create a database to store the client connection information. Because the real server does not spend resources creating a database to store the client connection information, method 100 reduces the consumption of resources and provides defense to attacks that cause the real server to create a large database, exhausting its resources.

In the illustrated embodiment, the defense to the attacks is realized by the load-balancing device, which further shields the real server from attacks. By correlating the client connection information with the serial number of the SYN+ACK packet and receiving the ACK packet from the client, the load-balancing device completes a communication process similar to the three-way handshakes of the TCP. Further, the load-balancing device transmits the connection information of the real server to the client so that the real server may establish a TCP connection with the client. This facilitates a normal TCP connection established between the client and the real server.

Because a TCP connection is established between the client and the real server, based on a load-balancing mode of the load-balancing device, the client may forward a request packet to the load-balancing device. The load-balancing device may then forward the request packet to a real server such that the real server may directly reply to the client with a responsive packet.

In some embodiments, a header of TCP packet may generally include fields of a source port, a destination port, a serial number, a confirmation number, reserved bits, TCP options, windows, check portions, urgent pointer, etc. A source port is a port or procedure that sends a packet. A destination port is a port or procedure that receives a packet.

A serial number is used to mark a packet so that the device receiving the packet may confirm the data included in the packet based on the serial number. When establishing a connection, both parties may provide an initial serial number. In the illustrated embodiment, the serial number of the SYN+ACK packet may be an initial serial number, which may be obtained by computation based on the client connection information. The client connection information may be preserved in the serial number transmitted between devices. This avoids the need to create a database to store the client connection information and reduces the use of resources.

A confirmation number may be used to confirm that one or more specific packets have been received. In the illustrated embodiment, the confirmation number may equal the serial number of the last received packet plus one.

In the illustrated embodiment, the serial number that is computed based on the client connection information may be obtained by subtracting one from the confirmation number included in the ACK packet returned from the client. Based on the serial number, the client connection information may be determined.

The connection information may be included into TCP option fields. The load-balancing device may analyze the TCP option fields of the SYN packet to acquire the client connection information. The client may analyze the TCP option fields of the SYN+ACK packet to acquire the connection information of the real server. The client connection information may be included in the TCP option fields of the self-defined packet.

The TCP option fields of the SYN+ACK packet returned from the load-balancing device includes the connection information of the real server. The connection information of the real server may be acquired by the load-balancing device through negotiation with the real server.

In the related art, an attacker may take advantage of the loophole in the TCP scheme and sends a large quantity of SYN packets to attack the real server. This is called synchronous flood (SYN flood). The attack is effectuated because once the real server receives the large quantity of SYN packets, it may be forced to use a lot of resources to create a large database to store the data included in the SYN packets. This makes the real server unavailable to attend to the normal packets and affects the services provided by the real server.

SYN flood is one of the well-known Denial of Services (DoS) attack or Distributed Denial of Service (DDoS) attack. The attack causes the attacked device to exhaust its resources. For example, because of the attack, a CPU may reach its full capacity and cannot process the normal service requests, or the internal memory of the attached device is occupied from having to store the trash information.

Because the client connection information is included in serial number of the SYN+ACK packet transmitted from the load-balancing device, it is not necessary to create a database to store the client connection information. The method consistent with embodiments of the present disclosure does not consume much resources and provides defense to SYN flood attacks in the load-balancing device. The method improves defense to the attacks and reduces consumption of resources so that normal service request may be serviced.

Consistent with embodiments of the present disclosure, in a load-balancing mode, request flows from the client to the real server go through the load-balancing device, and the response flows from the real server to the client do not go through the load-balancing device. In the response flows, the real server transmits reply packet directly to the client so as to reduce the load to the load-balancing device. Accordingly, the load-balancing device would be a bottleneck for response flows.

In some embodiments, connection information included in TCP option fields may include:
mss: maximum segment size, indicating a length of the maximum data transmitted to another terminal via a TCP connection;
wsscale: window scale option, used to increase a size of TCP receiving window to more than 65536 bytes;
timestamp: a timestamp option, employed by a sender of a packet to include a timestamp in a packet, which will be returned by a receiver after the receiver confirms the receipt so that the sender may calculate a round-trip time (RTT) for each ACK packet; and
SACK: selective acknowledgment, allowing a party to re-send only the lost packets, but not all of the subsequent packets, and providing a corresponding mechanism enabling the receiver to inform the sender of the lost data, the re-sent data, and the received data, etc.

Exemplary methods of generating a self-defined packet that includes the client connection information are explained below.

In one embodiment, the ACK packet returned from the client may be directly modified to form the self-defined packet. The client connection information may be written into the TCP option field of the ACK packet. The modified ACK packet may include an identifier indicating it is a modified ACK packet to form the self-defined packet.

In one embodiment, the modified ACK packet identifier may be placed in the reserved bits of the TCP header. For example, when there are four reserved bits, one of the bits may be used for the identifier and three other bits may remain empty.

When the real server receives the self-defined packet generated by modifying the ACK packet, it may determine that the received packet is a self-defined packet based on the identifier. The real server may extract the client connection information from the TCP option fields of the self-defined packet. Because the connection information of the real server has been sent to the client, the real server may establish a TCP connection with client based on the extracted client connection information.

In one embodiment, the serial number of the self-defined packet is the same as that of the ACK packet to ensure that there is no inconsistency in the serial number of the packet transmitted among the client, load-balancing device, and real server.

In some embodiments, when establishing the TCP connection with the client, the real server extracts the client connection information, applies for a socket data structure, initializes related member variables of the socket, sets the TCP status of the socket to "established," and employs system socket creation functions to create the socket, so as to establish the connection. A socket is used to describe an address and port to indicate a node of a communication chain, and to realize communications between virtual machines and computers.

In another embodiment, the self-defined packet may be a self-defined SYN packet, which adopts three-way handshakes of the TCP scheme.

A serial number of the self-defined SYN packet may be the serial number computed based on the SYN packet transmitted from the client. The confirmation number of the self-defined SYN packet may be set to be the serial number of the SYN+ACK packet returned from the load-balancing device. The above assignment of serial number ensures that there is no inconsistency in the serial number of the packet transmitted among the client, load-balancing device and real server.

The client connection information may be written into TCP option fields of the self-defined SYN packet. In one embodiment, the address of the load-balancing device may also be written into TCP option fields. These may be implemented by adding self-defined TCP option fields to the self-defined SYN packet to write the address of the load-balancing device therein.

After the real server receives the self-defined SYN packet, it may extract the client connection information therefrom, and, based on the extracted client connection information, establish a half-open TCP connection with the client and later convert the half-open TCP connection to a full TCP connection.

For example, the real server may establish a half-open TCP connection with the client based on the extracted client connection information. The real server may determine whether a packet is a self-defined SYN packet by checking whether the packet includes the address of the load-balancing device included in, for example, TCP option fields.

Based on the TCP and the address of the load-balancing device, the real server may return a SYN+ACK packet to the load-balancing device so that the load-balancing device may forward the ACK packet received from the client to the real server. Upon receiving the ACK packet, the real server may convert the half-open TCP connection to the full TCP connection.

In the illustrated embodiment, the load-balancing device provides defense to attacks. The load-balancing device preserves the client connection information in the serial number of the SYN+ACK packet. When the load-balancing device receives the ACK packet returned from the client, it may send a self-defined SYN packet to the real server so that the real server may determine that it is a legitimate SYM packet to be processed.

When the real server receives the self-defined SYN packet, it may identify the self-defined TCP option fields in the self-defined SYN packet, establish a half-open TCP connection, and, based on the address of the load-balancing device included in the self-defined TCP option fields, return the SYN+ACK packet to the load-balancing device.

Connection information stored by the load-balancing device may not include the address of load-balancing device. To establish a connection, an address and port of the client and an address and port of the real server are generally needed. A returned SYN+ACK packet may need to include such information. The real server may return the SYN+ACK packet by transmitting it through, for example, an IPIP tunnel, to preserve the address and port information. The IPIP tunnel is a protocol that attaches IP (Internet Protocol) to a header of an IP packet.

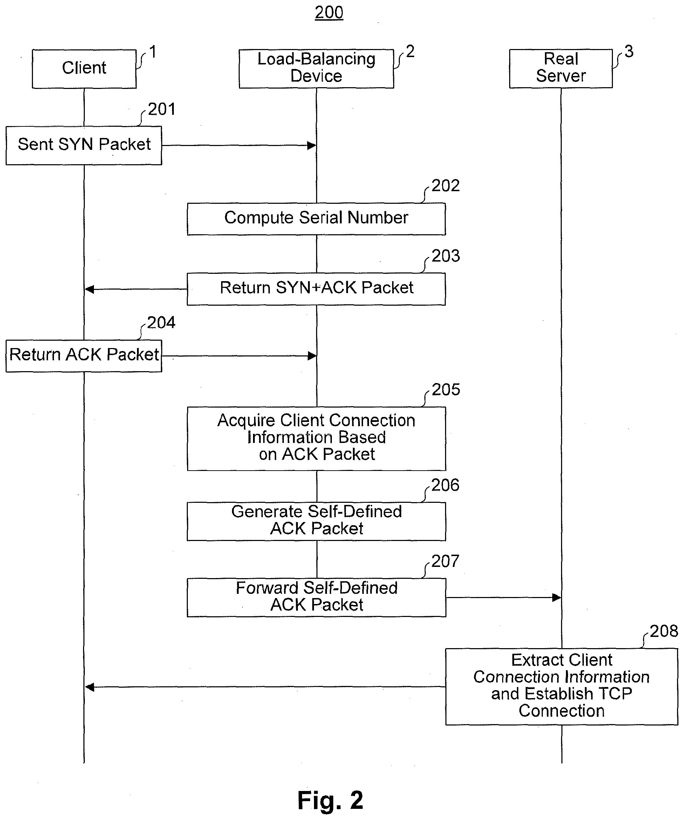

Fig. 2 is a flow chart illustrating an exemplary method 200 for establishing a TCP connection in a load-balancing system including a client 1, a load-balancing device 2, and a real server 3. The method 200 includes the following steps:

In step 201, the client 1 forwards an SYN packet to the load-balancing device 2. The SYN packet includes client connection information.

In step 202, the load-balancing device 2 computes a serial number based on the client connection information.

In one embodiment, the serial number may be obtained with a synchronous cookie (SYN cookie) technology. The client connection information included in the SYN packet may be processed with a cookie function to generate a cookie value, which may be used as the serial number. SYN cookie technology may be employed to prevent the SYN flood attacks. When returning an SYN+ACK packet in response to a TCP packet, the SYN cookie technology does not allocate a specific data segment. Instead, it may compute a cookie value based on the SYN packet.

Assuming that Saddr is a client source address, daddr is a visit destination address, sport is a client source port, and dport is a visit destination port, a cookie value may be obtained as follows:
1. A = cookie_hash(saddr, daddr, sport, dport, 0, 0), where the hash function employs a crc32 algorism;
2. B = a serial number of SYN packet from the client;
3. C = jiffies / (HZ * 60), where jiffies is current system clock counting, HZ is system clock counting in seconds, and the unit of C is minute;
4. D = cookie_hash(saddr, daddr, sport, dport, C, 1);
5. E = preserved TCP option value, distribution : [21][20][19-16][15-0], where the 21 bits are the SACK option, the 20 bits are the timestamp option, 19-16 bits are wscale option, and 15-0 bits are the mss option; and
6. cookie = A + B + (C 〈〈 24) + ((D + E) & 0x00FFFFFF).

In step 203, the load-balancing device 2 returns an SYN+ACK packet that includes connection information of the real server 3 to the client 1. The serial number that the load-balancing device 2 computed based on the client connection information is assigned to be the serial number of the SYN+ACK packet.

In step 204, the client 1 returns an ACK packet to the load-balancing device 2. A confirmation number of the ACK packet may be generated based on the serial number of the SYN+ACK packet. In one embodiment, the confirmation number of the ACK packet equals to the serial number of the SYN+ACK plus one.

In step 205, the load-balancing device 2 acquires the client connection information based on the confirmation number of the ACK packet. In one embodiment, the serial number may be obtained by subtracting one from the confirmation number. When the serial number is a cookie value, the cookie value may be checked by an algorism to obtain the client connection information. For example, a checking process is explained as follows.
1. Set the cookie value to be the confirmation number of the ACK packet minus one;
2. Calculate cookie = Cookie - A - B (the definition of A and B is explained above);
3. C1 = jiffies / (HZ * 60), where jiffies increases as a lapse of time;
4. Diff= C1 - (Cookie 〉〉24) = C1 - C, where Diff is a time difference, where the cookie is invalid when Diff is greater than a predetermined threshold value;
5. C=C1 - Diff, D = cookie_hash(saddr, daddr, sport, dport, C, 1);
6. E = (cookie - D) & 0x00FFFFFF, to acquire the preserved TCP option;
7. Determine whether the obtained TCP option is legitimate; and
8. If the TCP option is legitimate, return the value of the TCP option.

If the TCP option is not legitimate, the method 200 may be terminated immediately, without advancing to further steps.

In step 206, the load-balancing device 2 may include an identifier in the ACK packet returned from the client 1, and may write the client connection information into the ACK packet to generate a self-defined packet.

The identifier may be employed to identify the self-defined packet. In one embodiment, the identifier may be written into one of the reserved bits of the ACK packet header. The client connection information may be written into the TCP option fields.

In step 207, the load-balancing device 2 forwards the self-defined ACK packet to the real server 3.

In step 208, the real server 3 extracts the client connection information from the self-defined packet, and establishes a TCP connection with the client 1 based on the client connection information.

In some embodiments, the ACK packet returned from the client 1 may include a request for data or the ACK packet may be a request packet that includes a confirmation identifier, so that the self-defined ACK packet may also include the data request.

After the real server 3 establishes the TCP connection with the client 1, it may provide a response packet to the client based on the data request.

In the illustrated embodiment, the client connection information may be preserved in the SYN+ACK packet returned by the load-balancing device 2 to the client 1. There may be no need to create a database to store the client connection information. In addition, the system resource would not be consumed to create a database. Even if the system is under a SYN flood attack, the load-balancing device 2 may provide defense to the attack so that it would not affect the normal service requests from the client 1 to the real server 3.

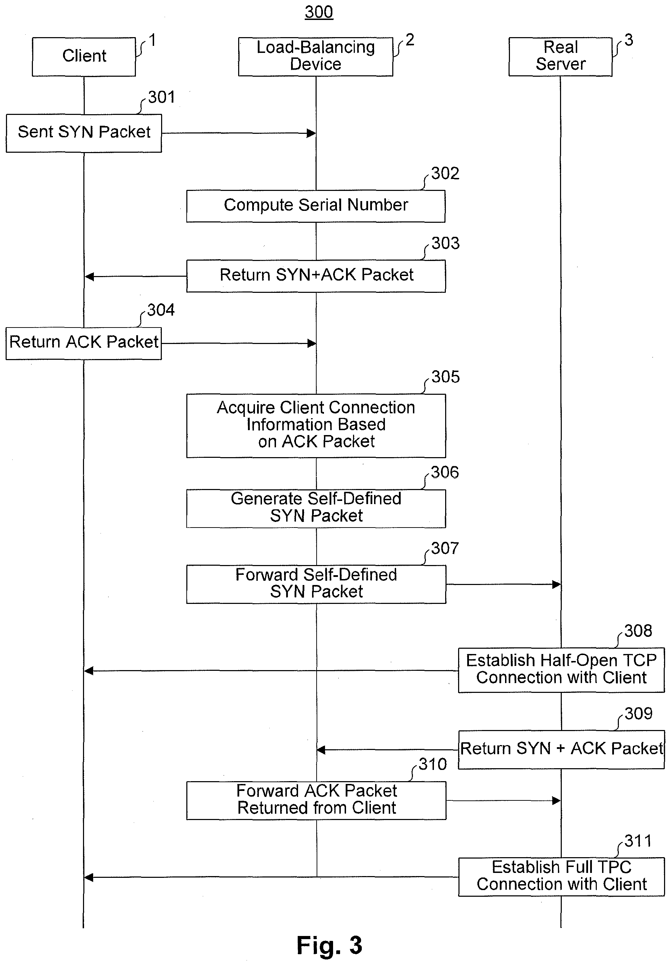

Fig. 3 is a flow chart illustrating another method 300 for establishing a TCP connection in a load-balancing system including a client 1, a load-balancing device 2, and a real server 3. The method 300 includes the following steps:

In step 301, the client 1 forwards an SYN packet to the load-balancing device 2. The SYN packet includes client connection information.

In step 302, the load-balancing device 2 computes a serial number based on the client connection information.

In one embodiment, the serial number may be obtained with a SYN cookie technology. The client connection information included in the SYN packet may be processed with a cookie function to generate a cookie value, which may be used as the serial number. SYN cookie technology may be employed to prevent SYN flood attacks. When returning the SYN+ACK packet in response to the TCP packet, the SYN cookie technology does not allocate a specific data segment. Instead, it may compute a cookie value based on the SYN packet.

In step 303, the load-balancing device 2 returns an SYN+ACK packet that includes connection information of the real server 3 to the client 1. The serial number computed in step 302 may be assigned to be the serial number of the SYN+ACK packet.

In step 304, the client 1 returns an ACK packet to the load-balancing device 2. A confirmation number of the ACK packet may be formed based on the serial number of the SYN+ACK packet. In one embodiment, the confirmation number of the ACK packet equals to the serial number of the SYN+ACK plus one.

In step 305, the load-balancing device 2 acquires the client connection information based on the confirmation number of the ACK packet. In one embodiment, the serial number may be obtained by subtracting one from the confirmation number. When the serial number is a cookie value, the cookie value may be checked by an algorism to obtain the client connection information. The process of checking the cookie value is explained above with respect to the method 200 and will not be repeated herein.

In step 306, the load-balancing device 2 generates a self-defined SYN packet based on the SYN packet transmitted from the client 1. The load-balancing device 2 uses the serial number of the SYN packet returned from the client 1 as a serial number of the self-defined SYN packet; uses the serial number of the SYN+ACK packet transmitted from the load-balancing device 2 as a confirmation number of the self-defined SYN packet; writes the client connection information into the self-defined SYN packet; and writes the address of the load-balancing device 2 into a self-defined field of the self-defined SYN packet.

In step 307, the load-balancing device 2 forwards the self-defined SYN packet to the real server 3.

In step 308, the real server 3 establishes a half-open TCP connection with the client 1 based on the client connection information included in the self-defined SYN packet.

In step 309, the real server 3 returns an SYN+ACK packet to the load-balancing device 2, based on the address of the load-balancing device 2. The serial number of the SYN+ACK packet returned from the real server 3 may be the confirmation number of the self-defined SYN packet.

In step 310, the load-balancing device 2 forwards the ACK packet returned from the client 1 to the real server 3 after it receives the SYN+ACK packet returned from the real server 3.

In step 311, the real server 3 establishes a full TCP connection with the client 1 after receiving the ACK packet of the client 1.

In some embodiments, the ACK packet returned from the client 1 may include a data request or the ACK packet may be a request packet that includes a confirmation identifier. After the real server 3 receives the ACK packet returned from the client 1 and establishes the TCP connection with the client 1, it may provide a response packet to the client based on the data request.

In the illustrated embodiment, the client connection information may be preserved in the SYN+ACK packet transmitted from the load-balancing device 2 to the client 1. Creating a database to store the client connection information may be omitted. In addition, the system resource would not be consumed to create a database. Even if the system is under a SYN flood attack, it may still provide normal services because the system resources would not be exhausted and no database is created to store client connection information. Because the load-balancing device 2 provides defense to attacks, the real server 3 receives legitimate SYN packet (the self-defined SYN packet) so that it may provide normal services.

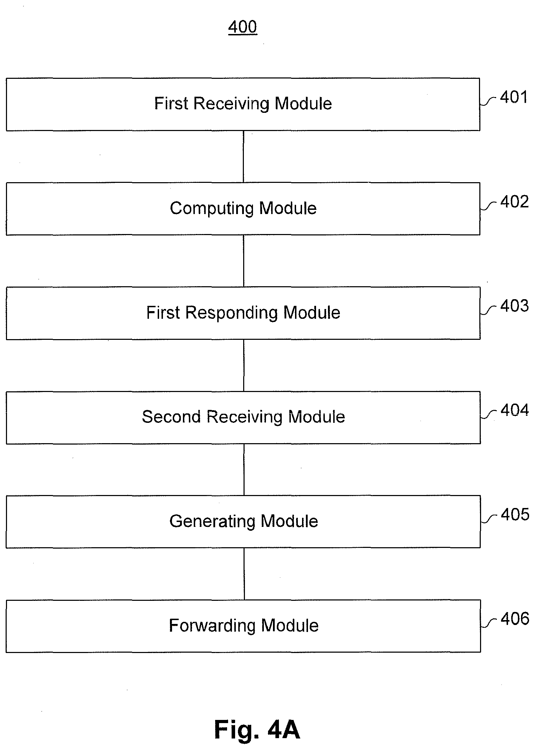

Fig. 4A is block diagram illustrating an exemplary load-balancing device 400 consistent with embodiments of present disclosure. The device 400 may include a first receiving module 401, a computing module 402, a first responding module 403, a second receiving module 404, a generating module 405, and a first forwarding module 406.

The first receiving module 401 may be configured to receive an SYN packet transmitted from a client.

The computing module 402 may be configured to compute a serial number based on the SYN packet received from the client.

The first responding module 403 may be configured to return an SYN+ACK packet to the client and assign the serial number to the SYN+ACK packet.

The second receiving module 404 may be configured to receive an ACK packet from the client and, based on a confirmation number of the ACK packet, acquire the client connection information.

The generating module 405 may be configured to generate a self-defined packet to include the client connection information.

The first forwarding module 406 may be configured to forward the self-defined packet to the real server so that the real server may extract the client connection information from the self-defined packet and establish a TCP connection with the client based on the client connection information.

In the illustrated embodiment, the load-balancing device uses client connection information included in the SYN packet to compute the serial number, and assigns the serial number to the SYN+ACK packet transmitted from the load-balancing device to the client, so that the real server may not need to create a database to store the client connection information. Because there is no need to create a database to store the client connection information, the device 400 reduces consumption of resource and provides defense to attacks that cause the real server to create a huge database and exhaust its resources.

In the illustrated embodiment, the defense to the attacks is realized by the load-balancing device, which further shields the real server from attacks.

After the load-balancing device 400 receives the ACK packet from the client, it forwards a self-defined packet including the client connection information to the real server so that the real server may establish a TCP connection with the client.

In some embodiments, the generating module 405 may be further configured to add an identifier and write client connection information into the ACK packet returned from the client to generate the self-defined packet. The identifier may be used to indicate that it is a modified ACK packet.

That is, the ACK packet returned from the client may be directly modified to generate the self-defined packet. According to the TCP scheme, the TCP option fields of the ACK packet may be empty so that the client connection information may be written therein. Further, The identifier may be added in the modified ACK packet to generate the self-defined packet.

In one embodiment, the modified ACK packet identifier may be placed in the reserved bits of the TCP header. For example, when there are four reserved bits, one of the bits may be used for the identifier and three other bits remain empty for use.

When the real server receives the self-defined packet generated by modifying the ACK packet, it may determine that the received packet is a self-defined packet based on the identifier. The real server may extract the client connection information from the TCP option fields. Because the connection information of the real server has been sent to the client, the real server may establish a TCP connection with client based on the extracted client connection information.

In one embodiment, the serial number of the self-defined packet may be the same as that of the ACK packet to ensure that there is no inconsistency in the serial number of the packet transmitted among the client, load-balancing device and real server.

In some embodiments, when establishing the TCP connection with the client, the real server extracts the client connection information, applies for a socket data structure, initializes related member variables of the socket, sets TCP status of the socket to "established," and employs system socket creation functions to create the socket, so as to establish the TCP connection with the client.

In another embodiment, the generating module 405 is further configured to set a serial number of the self-defined SYN packet to be the serial number of the SYN packet transmitted from the client; set the serial number of the SYN+ACK packet transmitted from the load-balancing device to be the confirmation number of the self-defined SYN packet; write the client connection information into the self-defined SYN packet; and add the address of the load-balancing device into a self-defined field of the self-defined SYN packet.

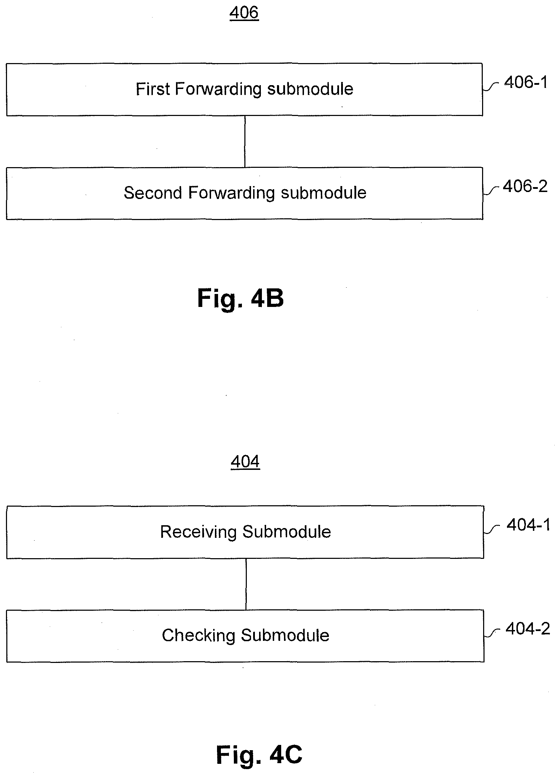

In some embodiments, referring to Fig. 4B, the first forwarding module 406 may include a first forwarding submodule 406-1 and a second forwarding submodule 406-2.

The first forwarding submodule 406-1 may be configured to forward the self-defined SYN packet to the real server so that the real server may establish a half-open TCP connection with the client, based on the client connection information included in the self-defined SYN packet.

The second forwarding submodule 406-2 may be configured to, after the SYN+ACK packet transmitted from the real server based on the address of the load-balancing device is received, forward the ACK packet returned from the client to the real server, so that the real server may convert the half-open TCP connection to a full TCP connection with the client.

For example, the real server may establish the half-open TCP connection with the client based on the extracted client connection information. The real server may determine whether a packet is a self-defined SYN packet by checking whether the packet includes the address of the load-balancing device included in, for example, TCP option fields.

Based on the TCP and the address of the load-balancing device, the real server may return an SYN+ACK packet to the load-balancing device so that the load-balancing device may forward the ACK packet received from the client to the real server. Upon receiving the ACK packet, the real server may convert the half-open TCP connection to the full TCP connection.

In the illustrated embodiment, the load-balancing device provides defense to attacks. When the load-balancing device receives the ACK packet returned from the client, it may send the self-defined SYN packet to the real server so that the real server may determine that it is a legitimate SYN packet to be processed.

In some embodiments, the ACK packet returned from the client may include a request for data so that the self-defined ACK packet may also include the data request. After the real server establishes the TCP connection with the client, it may provide a response packet to the client based on the data request.

In some embodiments, the second receiving module 404 may be further configured to receive the ACK packet that includes a data request returned from the client, and, based on the confirmation number of the ACK packet, compute the client connection information.

The generating module 405 is further configured to generate a self-defined packet to include the client connection information and the data request therein.

The first forwarding module 406 may be configured to forward the self-defined packet to the real server so that the real server may extract the client connection information and the data request from the self-defined packet, and, based on the client connection information, establish the TCP connection with the client, and send a response packet to the client based on the data request.

In one embodiment, a serial number may be obtained with the SYN cookie technology. The client connection information included in the SYN packet is processed with a cookie function to generate a cookie value, which is used as the serial number. The computing module 402 is further configured to employ the cookie function of the SYN cookie technology to process the client connection information to obtain a cookie value as the serial number for the SYN+ACK packet returned from the load-balancing device to the client.

In some embodiments, referring to Fig. 4C, the second receiving module may include a receiving submodule 404-1 and a checking submodule 404-2.

The receiving submodule 404-1 may be configured to receive the ACK packet returned from the client, and compute a cookie value based on the confirmation number of the ACK packet.

The checking submodule 404-2 may be configured to check the cookie value and acquire the client connection information after confirming the validity of the cookie value.

In one embodiment, the cookie value equals to a value of subtracting one from the confirmation number. If the cookie value passes the checking by the checking submodule 404-2, the client connection information may be acquired therefrom.

The computing and checking of the cookie value is explained above and will not be repeated again herein.

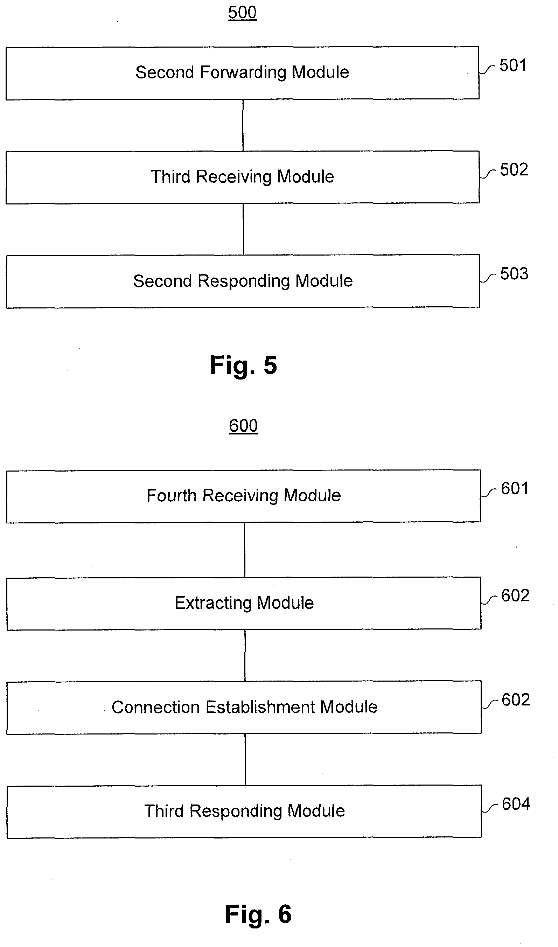

Fig. 5 is a block diagram of a client device 500 of a load-balancing system consistent with embodiments of the present disclosure. Referring to Fig. 5, the client device 500 includes a second forwarding module 501, a third receiving module 502, and a second responding module 503.

The second forwarding module 501 may be configured to forward an SYN packet including client connection information to a load-balancing device.

The third receiving module 502 may be configured to receive an SYN+ACK packet returned from the load-balancing device. A serial number of the SYN+ACK packet may be computed by the load-balancing device based on the client connection information included in the SYN packet. The SYN+ACK packet includes connection information of a real server.

The second responding module 503 may be configured to respond to the load-balancing device with an ACK packet so that the load-balancing device may perform computation to obtain the client connection information based on a confirmation number of the ACK packet, write the client connection information into a self-define packet, and forward the self-define packet to the real server. The real server may extract the client connection information from the self-defined packet and establish a TCP connection with the client based on the client connection information.

In some embodiments, the ACK packet transmitted from the second responding module 503 may include a request for data so that the load-balancing device may include the data request in the self-defined packet. After the real server establishes the TCP connection with the client, it may forward a response packet to the client based on the data request.

Fig. 6 is a block diagram of a real server 600 of a load-balancing system consistent with embodiments of the present disclosure. Referring to Fig. 6, the real server 600 may include a fourth receiving module 601, an extracting module 602, and a connection establishment module 603.

The fourth receiving module 601 may be configured to receive a self-defined packet transmitted from a load-balancing device. In one embodiment, the self-defined packet is generated by the following process: the load-balancing device may receive an SYN packet transmitted from a client and compute a serial number based on client connection information included in the SYN packet. The load-balancing device may assign the serial number to an SYN+ACK packet that includes connection information of real server and send the SYN+ACK packet to the client. The load-balancing device may then receive an ACK packet from the client and may perform computation to obtain the client connection information based on a confirmation number of the ACK packet. The load-balancing device may write the client connection information to the self-defined packet.

The extracting module 602 may be configured to extract the client connection information from the self-defined packet.

The connection establishment module 603 may be configured to establish a TCP connection with the client based on the client connection information.

In some embodiments, the self-defined packet is a modified ACK packet returned from the client. The ACK packet is added with the client connection information and an identifier to indicate that it is a self-defined ACK packet. The extracting module 602 determines that the ACK packet is a self-defined packet by recognizing the identifier, and extract the client connection information from the modified ACK packet. The connection establishment module 603 establishes the TCP connection with the client based on the client connection information.

In some embodiments, the self-defined packet is a self-defined SYN packet. A serial number of the self-defined SYN packet is the serial number of the SYN packet transmitted from the client. A confirmation number of the self-defined SYN packet may be the serial number of a SYN+ACK packet transmitted from the load-balancing device to the client. The self-defined SYN packet may be a modification of the SYN packet transmitted from the client, modified to include the client connection information in its TCP option fields and an address of the load-balancing device in a self-defined field. The self-defined field may be a self-defined TCP option field.

Based on the TCP scheme and the client connection information, the connection establishment module 603 may establish a half-open TCP connection with the client and later convert the half-open TCP connection to a full TCP connection.

The extracting module 602 may be configured to, after receiving the self-defined SYN packet that includes a self-defined field, extract the client connection information, to prompt the connection establishment module 603 to establish the half-open TCP connection with the client.

In some embodiments, the real server 600 further includes a third responding module 604 configured to return an SYN+ACK packet to the load-balancing device, based on the address of the load-balancing device.

In some embodiments, the fourth receiving module 601 is further configured to receive the ACK packet returned from the client to the load-balancing device and forwarded by the load-balancing device, after the load-balancing device receives the SYN+ACK packet sent by the third responding module 604. After the fourth receiving module 601 receives the ACK packet of the client, the connection establishment module 603 may convert the half-open TCP connection to the full TCP connection.

In some embodiments, the ACK packet of the client may include a request for data. The real server 600 may return a response packet based on the data request after establishing TCP connection with the client.

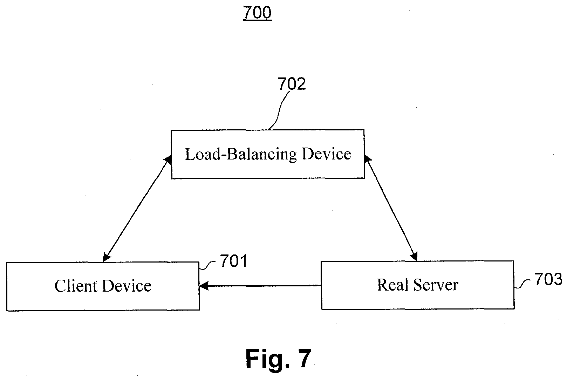

Fig. 7 is a block diagram illustrating a load-balancing system 700 consistent with embodiments of the present disclosure. The load-balancing system 700 includes a client device 701, a load-balancing device 702, and a real server 703.

The client device 701 may be configured to forward an SYN packet to the load-balancing device 702, receive an SYN+ACK packet returned from the load-balancing device 702, and forward an ACK packet to the load-balancing device 702.

The load-balancing device 702 may be configured to compute a serial number based on client connection information included in the SYN packet transmitted from the client device 701, return the SYN+ACK packet to the client device 701, assign the serial number to the SYN+ACK packet, compute to obtain the client connection information based on a confirmation number of the ACK packet returned from the client device 701, generate a self-defined packet, and forward the self-defined packet to the real server 703.

The real server 703 may be configured to extract the client connection information from the self-defined packet transmitted from the load-balancing device 702, and establish a TCP connection with the client device 701 based on the client connection information.

In the illustrated embodiment, the load-balancing device 702 preserves the client connection information included in the SYN packet in the SYN+ACK packet, so that there is no need to create a databased to store the client connection information to reduce consumption of system resources. The load-balancing device 702 provides defense to attacks and improves security. Based on the self-defined packet, the load-balancing device 702 may transmit the client connection information to the real server 703. After the real server 703 received the self-defined packet, it may establish the TCP connection with the client device 701.

The methods and devices consistent with embodiments of the present disclosure enable establishment of a TCP connection among a client and a real server and may effectively defend SYN flood attacks. There is no need to create a database to store the client connection information, which reduces consumption of system resources. The methods and devices consistent with embodiments of the present disclosure enable that the normal service requests may be serviced.

The devices and servers consistent with the embodiments of the present disclosure may include one or more processors, input/output ports, network connectors, and memory devices.

The memory devices includes non-transitory computer-readable medium for storing instructions, which, when executed by the one or more processors, cause the processors to perform the methods described above. The medium may be random access memory (RAM), or other non-volatile memory, such as read only memory (ROM), or flash memory. The memory device may be inside of a computer.

The non-transitory computer-readable medium may permanently or temporarily store information. It may be a mobile or stationary medium. The information may be computer-readable instructions, data structures, process modules, or other data. The non-transitory computer-readable medium may include phase-change random access memory (PRAM), static random-access memory (SRAM), dynamic random-access memory (DRAM), other types of RAM, Electrically Erasable Programmable Read-Only Memory (EEPROM), flash memory, registers, caches, CD, DVD, other types of optical storage medium, magnetic tapes, magnetic drives, or other types of magnetic storage medium, to storage computer messages.

The illustrated methods, devices, servers, and systems may be performed by software, hardware, or a combination of software and hardware for allowing a specialized device having the specialized components to perform the functions described above. For example, they may be implemented in an application-specific integrated circuit (ASIC), or other hardware devices. In one embodiment, the steps and functions of a module or submodule may be performed by a physical processor. In one embodiment, the steps and their relevant data structures may be stored in a non-transitory computer-readable medium, such as a RAM, a magnetic or optical drive, a magnetic disc and the like. In some embodiments, the steps or functions of the present disclosure may be implemented with hardware devices, such as circuits designed to work with the processor to execute the steps or functions.

In some embodiments, all or a portion of the methods may be implemented by computer programs, such as computer instructions, which, when executed by a computer, cause the computer to perform the methods or functions. These computer instructions may be stored in a portable or non-portable, non-transitory computer storage medium, may be transmitted by broadcasting or in a network, and/or may be stored in a memory device of a computing device. A device consistent with the embodiments of the present disclosure includes a memory device configured to store the computer instructions and a processor configured to execute the instructions to perform the methods or embodiments of the present disclosure.

Other embodiments of the invention will be apparent to those skill in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims. One of ordinary skill in the art will also understand that multiple ones of the above described steps or modules may be combined as one step or module, and each of the above described modules may be further divided into a plurality of submodules. A singular expression of a term in the present disclosure does not exclude that it may be plural. The ordinal numbers used in the present disclosure does not necessarily present the order of the steps or methods. The order of the steps or methods may be modified according to the practical needs.

It will be appreciated that the present invention is not limited to the exact construction that has been described above and illustrated in the accompanying drawings, and that various modifications and changes may be made without departing from the scope thereof. It is intended that the scope of the invention only be limited by the appended claims.

## Claims

1. An apparatus (702) for establishing a connection in a load-balancing system, the apparatus being coupled between a client device (701) and a real server (703) that provides service to the client device, the apparatus comprising:
a memory device storing instructions; and
a processor arranged to execute the instructions stored in the memory device to cause the apparatus to:
receive (101) a synchronous, SYN, packet from the client device (701), the SYN packet including client connection information;
based on the client connection information, compute (102) a serial number preserving the client connection information;
assign the serial number to a first synchronous acknowledgement, SYN+ACK, packet to preserve the client connection information;
acquire connection information of the real server (703) through negotiation with the real server;
add the acquired connection information of the real server (703) to the first SYN+ACK packet;
after adding the acquired connection information of the real server (703), return (103) the first SYN+ACK packet to the client device (701);
receive (104) an acknowledgement, ACK, packet from the client device (701) and compute to obtain the client connection information based on a confirmation number of the ACK packet;
generate (105) a self-defined packet to include the client connection information; and
forward (106) the self-defined packet to the real server (703) so that the real server extracts the client connection information from the self-defined packet and establishes a Transmission Control Protocol, TCP, connection with the client device (701) based on the client connection information.

2. The apparatus of claim 1, wherein the processor is further arranged to cause the apparatus (702):
add an identifier and write the client connection information into the ACK packet returned from the client device (701) to generate the self-defined packet, the identifier being to identify the self-defined packet.

3. The apparatus of any of claims 1-2, wherein the self-defined packet is a self-defined SYN packet and wherein the processor is further arranged to cause the apparatus (702):
set a serial number of the self-defined SYN packet to be a serial number of the SYN packet transmitted from the client device (701);
set a serial number of the first SYN+ACK packet transmitted from the load-balancing device (702) to be a confirmation number of the self-defined SYN packet;
write the client connection information into the self-defined SYN packet; and
add an address of the load-balancing device (702) to the self-defined SYN packet.

4. The apparatus of claim 3, wherein the processor is further arranged to cause the apparatus (702):
forward the self-defined SYN packet to the real server (703) so that the real server establishes a half-open TCP connection with the client device (701) based on the client connection information included in the self-defined SYN packet, and
after receiving a second SYN+ACK packet transmitted from the real server based on the address of the load-balancing device, forward the ACK packet returned from the client device (701) to the real server (703) so that the real server converts the half-open TCP connection to the TCP connection, wherein a serial number of the second SYN+ACK packet is the confirmation number of the self-defined SYN packet.

5. The apparatus of any of claims 1-4, wherein the ACK packet retuned from the client device (701) includes a request for data, wherein the processor is further arranged to cause the apparatus (702):
generate the self-defined packet to include the client connection information and the data request; and
forward the self-defined packet to the real server (703) so that the real server extracts the client connection information and the data request from the self-defined packet so that the real server establishes the TCP connection with the client device (701) and forwards a response packet to the client device based on the data request after the establishment of the TCP connection.

6. The apparatus of any of claims 1-5, the processor is further arranged to cause the apparatus (702):
compute the serial number using a cookie function of a synchronous cookie technology to compute the client connection information to obtain a cookie value as the serial number;
receive the ACK packet from the client device (701) and compute the confirmation number of the ACK packet to obtain the cookie value; and
check a validity of the cookie value, and acquire the client connection information when the cookie value passes the checking.

7. A computer-implemented method for establishing a connection in a load-balancing system, the method being performed by a load-balancing device (702) coupled between a client device (701) and a real server (703) that provides service to the client device, the method comprising:
receiving (101) a synchronous, SYN, packet from the client device (701), the SYN packet including client connection information;
based on the client connection information, computing (102) a serial number preserving the client connection information;
assigning the serial number to a first synchronous acknowledgement, SYN+ACK, packet to preserve the client connection information;
acquiring connection information of the real server through negotiation with the real server (703);
adding the acquired connection information of the real server (703) to the first SYN+ACK packet;
after adding the acquired connection information of the real server (703), returning (103) the first SYN+ACK packet to the client device (701);
receiving (104) an acknowledgement, ACK, packet from the client device (701) and computing to obtain the client connection information based on a confirmation number of the ACK packet;
generating (105) a self-defined packet to include the client connection information; and
forwarding (106) the self-defined packet to the real server (703) so that the real server extracts the client connection information from the self-defined packet and establishes a Transmission Control Protocol, TCP, connection with the client device (701) based on the client connection information.

8. The computer-implemented method of claim 7, wherein the generating of the self-defined packet includes:
adding an identifier and writing the client connection information into the ACK packet returned from the client device (701) to generate the self-defined packet, the identifier being to identify the self-defined packet.

9. The computer-implemented method of any of claims 7-8, wherein the self-defined packet is a self-defined SYN packet, wherein the self-defined SYN packet is generated by:
setting a serial number of the self-defined SYN packet to be a serial number of the SYN packet transmitted from the client device (701);
setting a serial number of the first SYN+ACK packet transmitted from the load-balancing device (702) to be a confirmation number of the self-defined SYN packet;
writing the client connection information into the self-defined SYN packet; and
adding an address of the load-balancing device to the self-defined SYN packet.

10. The computer-implemented method of claim 9,
wherein the self-defined SYN packet is forwarded to the real server (703) so that the real server establishes a half-open TCP connection with the client device (701) based on the client connection information included in the self-defined SYN packet, and forwards a second SYN+ACK packet to the load-balancing device (702) based on the address of the load-balancing device, wherein a serial number of the second SYN+ACK packet is the confirmation number of the self-defined SYN packet, and
wherein the method further comprises, after receiving the second SYN+ACK packet, forwarding the ACK packet returned from the client device (701) to the real server (703) so that the real server converts the half-open TCP connection to the TCP connection.

11. The computer-implemented method of any of claims 7-10,
wherein the ACK packet returned from the client device (701) includes a request for data,
wherein the generating of the self-defined packet includes writing the client connection information and the data request to the self-defined packet, and
wherein forwarding of the self-defined packet to the real server (703) prompts the real server to extract the client connection information and the data request so that the real server establishes the TCP connection with the client device (701) and forwards a response packet to the client device based on the data request after the establishment of the TCP connection.

12. The computer-implemented method of any of claims 7-11,
wherein the computing of the serial number includes: using a cookie function of a synchronous cookie technology to compute the client connection information to obtain a cookie value as the serial number; and
wherein the computing to obtain the client connection information based on the confirmation number of the ACK packet includes: computing the confirmation number of the ACK packet to obtain the cookie value, checking a validity of the cookie value, and acquiring the client connection information when the cookie value passes the checking.

13. A non-transitory computer readable medium that stores a set of instructions that is executable by at least one processor of a device to cause the device to perform the method of any of claims 7-12.

## Patentansprüche

1. Vorrichtung (702) zum Herstellen einer Verbindung in einem Load-Balancing-System, wobei die Vorrichtung zwischen einem Client-Gerät (701) und einem realen Server (703) gekoppelt ist, der dem Client-Gerät einen Dienst bereitstellt, wobei die Vorrichtung umfasst: eine Speichervorrichtung, die Anweisungen speichert; und
einen Prozessor, der angeordnet ist, um die in der Speichervorrichtung gespeicherten Anweisungen auszuführen, um die Vorrichtung zu veranlassen:
ein synchrones, SYN-, Paket von dem Client-Gerät (701) zu empfangen (101), wobei das SYN-Paket Client-Verbindungsinformationen umfasst;
basierend auf den Client-Verbindungsinformationen eine Seriennummer zu berechnen (102), die die Client-Verbindungsinformationen aufrechterhält;
die Seriennummer einem ersten synchronen Bestätigungs-, SYN+ACK-, Paket zuzuweisen, um die Client-Verbindungsinformationen aufrechtzuerhalten;
Verbindungsinformationen des realen Servers (703) durch Aushandlung mit dem realen Server zu erfassen;
die erfassten Verbindungsinformationen des realen Servers (703) zu dem ersten SYN+ACK-Paket hinzuzufügen;
nach dem Hinzufügen der erfassten Verbindungsinformationen des realen Servers (703) das erste SYN+ACK-Paket an das Client-Gerät (701) zurückzusenden (103);
ein Bestätigungs-, ACK-, Paket von dem Client-Gerät (701) zu empfangen (104), und zu berechnen, um die Client-Verbindungsinformationen basierend auf einer Bestätigungsnummer des ACK-Pakets zu erhalten;
ein selbstdefiniertes Paket zu erzeugen (105), um die Client-Verbindungsinformationen zu umfassen; und
das selbstdefinierte Paket an den realen Server (703) weiterzuleiten (106), so dass der reale Server die Client-Verbindungsinformationen aus dem selbstdefinierten Paket extrahiert und eine Transmission Control Protocol-, TCP-, Verbindung mit dem Client-Gerät (701) basierend auf den Client-Verbindungsinformationen herstellt.

2. Vorrichtung nach Anspruch 1, wobei der Prozessor ferner angeordnet ist, um die Vorrichtung (702) zu veranlassen:
eine Kennung hinzuzufügen und die Client-Verbindungsinformationen in das von dem Client-Gerät (701) zurückgesendete ACK-Paket zu schreiben, um das selbstdefinierte Paket zu erzeugen, wobei die Kennung dazu dient, das selbstdefinierte Paket zu identifizieren.

3. Vorrichtung nach einem der Ansprüche 1 bis 2, wobei das selbstdefinierte Paket ein selbstdefiniertes SYN-Paket ist und wobei der Prozessor ferner angeordnet ist, um die Vorrichtung (702) zu veranlassen:
eine Seriennummer des selbstdefinierten SYN-Pakets als eine Seriennummer des SYN-Pakets festzulegen, das von dem Client-Gerät (701) übertragen wird;
eine Seriennummer des ersten SYN+ACK-Pakets, das von der Load-Balancing-Vorrichtung (702) übertragen wird, als eine Bestätigungsnummer des selbstdefinierten SYN-Pakets festzulegen;
die Client-Verbindungsinformationen in das selbstdefinierte SYN-Paket zu schreiben; und eine Adresse der Load-Balancing-Vorrichtung (702) dem selbstdefinierten SYN-Paket hinzuzufügen.

4. Vorrichtung nach Anspruch 3, wobei der Prozessor ferner angeordnet ist, um die Vorrichtung (702) zu veranlassen:
das selbstdefinierte Paket an den realen Server (703) weiterzuleiten, so dass der reale Server eine halboffene TCP-Verbindung mit dem Client-Gerät (701) basierend auf den Client-Verbindungsinformationen herstellt, die in dem selbstdefinierten SYN-Paket enthalten sind, und
nach dem Empfangen eines zweiten SYN+ACK-Pakets, das vom realen Server basierend auf der Adresse der Load-Balancing-Vorrichtung übertragen wurde, das vom Clientgerät (701) zurückgesendete ACK-Paket an den realen Server (703) weiterzuleiten, so dass der reale Server die halboffene TCP-Verbindung in die TCP-Verbindung umwandelt, wobei eine Seriennummer des zweiten SYN+ACK-Pakets die Bestätigungsnummer des selbstdefinierten SYN-Pakets ist.

5. Vorrichtung nach einem der Ansprüche 1 bis 4, wobei das von dem Client-Gerät (701) zurückgesendete ACK-Paket eine Datenanforderung umfasst, wobei der Prozessor ferner angeordnet ist, um die Vorrichtung (702) zu veranlassen:
das selbstdefinierte Paket zu erzeugen, um die Client-Verbindungsinformationen und die Datenanforderung zu umfassen; und
das selbstdefinierte Paket an den realen Server (703) weiterzuleiten, so dass der reale Server die Client-Verbindungsinformationen und die Datenanforderung aus dem selbstdefinierten Paket extrahiert, so dass der reale Server die TCP-Verbindung mit dem Client-Gerät (701) herstellt und ein Antwortpaket an das Client-Gerät basierend auf der Datenanforderung nach dem Herstellen der TCP-Verbindung weiterleitet.

6. Vorrichtung nach einem der Ansprüche 1 bis 5, wobei der Prozessor ferner angeordnet ist, um die Vorrichtung (702) zu veranlassen:
die Seriennummer unter Verwendung einer Cookie-Funktion einer synchronen Cookie-Technologie zu berechnen, um die Client-Verbindungsinformationen zu berechnen, um einen Cookie-Wert als Seriennummer zu erhalten;
das ACK-Paket von dem Client-Gerät (701) zu empfangen und die Bestätigungsnummer des ACK-Pakets zu berechnen, um den Cookie-Wert zu erhalten; und
eine Gültigkeit des Cookie-Werts zu prüfen und die Client-Verbindungsinformationen zu erfassen, wenn der Cookie-Wert die Prüfung besteht.

7. Computerimplementiertes Verfahren zum Herstellen einer Verbindung in einem Load-Balancing-System, wobei das Verfahren von einer Load-Balancing-Vorrichtung (702) durchgeführt wird, die zwischen einem Client-Gerät (701) und einem realen Server (703) gekoppelt ist, der dem Client-Gerät einen Dienst bereitstellt, wobei das Verfahren umfasst:
Empfangen (101) eines synchronen, SYN-, Pakets von dem Client-Gerät (701), wobei das SYN-Paket Client-Verbindungsinformationen umfasst;
Berechnen (102), basierend auf den Client-Verbindungsinformationen, einer Seriennummer, die die Client-Verbindungsinformationen aufrechterhält;
Zuweisen der Seriennummer an ein erstes synchrones Bestätigungs-, SYN+ACK-, Paket, um die Client-Verbindungsinformationen aufrechtzuerhalten;
Erfassen von Verbindungsinformationen des realen Servers durch Aushandlung mit dem realen Server (703);
Hinzufügen der erfassten Verbindungsinformationen des realen Servers (703) zu dem ersten SYN+ACK-Paket;
nach dem Hinzufügen der erfassten Verbindungsinformationen des realen Servers (703), Zurücksenden (103) des ersten SYN+ACK-Pakets an das Client-Gerät (701);
Empfangen (104) eines Bestätigungs-, ACK-, Pakets von dem Client-Gerät (701) und Berechnen, um die Client-Verbindungsinformationen basierend auf einer Bestätigungsnummer des ACK-Pakets zu erhalten;
Erzeugen (105) eines selbstdefinierten Pakets, um die Client-Verbindungsinformationen zu umfassen; und
Weiterleiten (106) des selbstdefinierte Pakets an den realen Server (703), so dass der reale Server die Client-Verbindungsinformationen aus dem selbstdefinierten Paket extrahiert und eine Transmission Control Protocol-, TCP-, Verbindung mit dem Client-Gerät (701) basierend auf den Client-Verbindungsinformationen herstellt.

8. Computerimplementiertes Verfahren nach Anspruch 7, wobei das Erzeugen des selbstdefinierten Pakets umfasst:
Hinzufügen einer Kennung und Schreiben der Client-Verbindungsinformationen in das von dem Client-Gerät (701) zurückgesendete ACK-Paket, um das selbstdefinierte Paket zu erzeugen, wobei die Kennung dazu dient, das selbstdefinierte Paket zu identifizieren.

9. Computerimplementiertes Verfahren nach einem der Ansprüche 7 bis 8, wobei das selbstdefinierte Paket ein selbstdefiniertes SYN-Paket ist, wobei das selbstdefinierte SYN-Paket erzeugt wird durch:
Festlegen einer Seriennummer des selbstdefinierten SYN-Pakets als eine Seriennummer des SYN-Pakets, das von dem Client-Gerät (701) übertragen wird;
Festlegen einer Seriennummer des ersten SYN+ACK-Pakets, das von der Load-Balancing-Vorrichtung (702) übertragen wird, als eine Bestätigungsnummer des selbstdefinierten SYN-Pakets;
Schreiben der Client-Verbindungsinformationen in das selbstdefinierte SYN-Paket; und Hinzufügen einer Adresse der Load-Balancing-Vorrichtung zu dem selbstdefinierten SYN-Paket.

10. Computerimplementiertes Verfahren nach Anspruch 9,
wobei das selbstdefinierte SYN-Paket an den realen Server (703) weitergeleitet wird, so dass der reale Server eine halboffene TCP-Verbindung mit dem Client-Gerät (701) basierend auf den in dem selbstdefinierten SYN-Paket enthaltenen Client-Verbindungsinformationen herstellt, und ein zweites SYN+ACK-Paket an die Load-Balancing-Vorrichtung (702) basierend auf der Adresse der Load-Balancing-Vorrichtung weiterleitet, wobei eine Seriennummer des zweiten SYN+ACK-Pakets die Bestätigungsnummer des selbstdefinierten SYN-Pakets ist, und
wobei das Verfahren ferner nach dem Empfangen des zweiten SYN+ACK-Pakets das Weiterleiten des von der Client-Vorrichtung (701) zurückgesendeten ACK-Pakets an den realen Server (703) umfasst, so dass der reale Server die halboffene TCP-Verbindung in die TCP-Verbindung umwandelt.

11. Computerimplementiertes Verfahren nach einem der Ansprüche 7 bis 10,
wobei das von dem Client-Gerät (701) zurückgesendete ACK-Paket eine Datenanforderung umfasst,
wobei das Erzeugen des selbstdefinierten Pakets das Schreiben der Client-Verbindungsinformationen und der Datenanforderung in das selbstdefinierte Paket umfasst, und
wobei das Weiterleiten des selbstdefinierten Pakets an den realen Server (703) den realen Server veranlasst, die Client-Verbindungsinformationen und die Datenanforderung zu extrahieren, so dass der reale Server die TCP-Verbindung mit dem Client-Gerät (701) herstellt und ein Antwortpaket an das Client-Gerät basierend auf der Datenanforderung nach dem Herstellen der TCP-Verbindung weiterleitet.

12. Computerimplementiertes Verfahren nach einem der Ansprüche 7 bis 11,
wobei das Berechnen der Seriennummer umfasst: Verwenden einer Cookie-Funktion einer synchronen Cookie-Technologie, um die Client-Verbindungsinformationen zu berechnen, um einen Cookie-Wert als Seriennummer zu erhalten; und
wobei das Berechnen zum Erhalten der Client-Verbindungsinformationen basierend auf der Bestätigungsnummer des ACK-Pakets umfasst: Berechnen der Bestätigungsnummer des ACK-Pakets, um den Cookie-Wert zu erhalten, Prüfen einer Gültigkeit des Cookie-Werts und Erfassen der Client-Verbindungsinformationen, wenn der Cookie-Wert die Prüfung besteht.

13. Nicht-flüchtiges computerlesbares Medium, das ein Satz von Anweisungen speichert, der durch mindestens einen Prozessor einer Vorrichtung ausführbar ist, um die Vorrichtung zu veranlassen, das Verfahren nach einem der Ansprüche 7 bis 12 durchzuführen.

## Revendications

1. Appareil (702) destiné à établir une connexion dans un système d'équilibrage de charge, l'appareil étant couplé entre un dispositif client (701) et un serveur réel (703) qui fournit un service au dispositif client, l'appareil comprenant : un dispositif de mémoire stockant des instructions ; et
un processeur agencé pour exécuter les instructions stockées dans le dispositif de mémoire pour amener l'appareil à :
recevoir (101) un paquet synchrone, SYN, en provenance du dispositif client (701), le paquet SYN comprenant des informations de connexion client ;
sur la base des informations de connexion client, calculer (102) un numéro de série conservant les informations de connexion client ;
attribuer le numéro de série à un premier paquet d'accusé de réception synchrone, SYN+ACK, pour conserver les informations de connexion client ;
acquérir des informations de connexion du serveur réel (703) par négociation avec le serveur réel ;
ajouter les informations de connexion acquises du serveur réel (703) au premier paquet SYN+ACK;
après avoir ajouté les informations de connexion acquises du serveur réel (703), renvoyer (103) le premier paquet SYN+ACK au dispositif client (701) ;
recevoir (104) un paquet d'accusé de réception, ACK, en provenance du dispositif client (701) et calculer pour obtenir les informations de connexion client sur la base d'un numéro de confirmation du paquet ACK ;
générer (105) un paquet auto-défini pour comprendre les informations de connexion client ; et
transférer (106) le paquet auto-défini au serveur réel (703) afin que le serveur réel extraie les informations de connexion client du paquet auto-défini et établisse une connexion de protocole de commande de transmission, TCP, avec le dispositif client (701) sur la base des informations de connexion client.

2. Appareil selon la revendication 1, ledit processeur étant en outre agencé pour amener l'appareil (702) à :
ajouter un identifiant et écrire les informations de connexion client dans le paquet ACK renvoyé à partir du dispositif client (701) pour générer le paquet auto-défini, l'identifiant étant destiné à identifier le paquet auto-défini.

3. Appareil selon l'une quelconque des revendications 1 à 2, ledit paquet auto-défini étant un paquet SYN auto-défini et ledit processeur étant en outre agencé pour amener l'appareil (702) à :
définir un numéro de série du paquet SYN auto-défini pour qu'il soit un numéro de série du paquet SYN transmis à partir du dispositif client (701) ;
définir un numéro de série du premier paquet SYN+ACK transmis à partir du dispositif d'équilibrage de charge (702) pour qu'il soit un numéro de confirmation du paquet SYN auto-défini ;
écrire les informations de connexion client dans le paquet SYN auto-défini ; et ajouter une adresse du dispositif d'équilibrage de charge (702) au paquet SYN auto-défini.

4. Appareil selon la revendication 3, ledit processeur étant en outre agencé pour amener l'appareil (702) à :
transférer le paquet SYN auto-défini au serveur réel (703) afin que le serveur réel établisse une connexion TCP semi-ouverte avec le dispositif client (701) sur la base des informations de connexion client comprises dans le paquet SYN auto-défini, et
après réception d'un second paquet SYN+ACK transmis à partir du serveur réel sur la base de l'adresse du dispositif d'équilibrage de charge, transférer le paquet ACK renvoyé à partir du dispositif client (701) au serveur réel (703) afin que le serveur réel convertisse la connexion TCP semi-ouverte en la connexion TCP, un numéro de série du second paquet SYN+ACK étant le numéro de confirmation du paquet SYN auto-défini.

5. Appareil selon l'une quelconque des revendications 1 à 4, ledit paquet ACK renvoyé par le dispositif client (701) comprenant une demande de données, ledit processeur étant en outre agencé pour amener l'appareil (702) à :
générer le paquet auto-défini pour comprendre les informations de connexion client et la demande de données ; et
transférer le paquet auto-défini au serveur réel (703) afin que le serveur réel extraie les informations de connexion client et la demande de données du paquet auto-défini afin que le serveur réel établisse la connexion TCP avec le dispositif client (701) et transférer un paquet de réponse au dispositif client sur la base de la demande de données après l'établissement de la connexion TCP.

6. Appareil selon l'une quelconque des revendications 1 à 5, le processeur est en outre agencé pour amener l'appareil (702) à :
calculer le numéro de série à l'aide d'une fonction de cookie d'une technologie de cookie synchrone pour calculer les informations de connexion client afin d'obtenir une valeur de cookie en tant que numéro de série ;
recevoir le paquet ACK en provenance du dispositif client (701) et calculer le numéro de confirmation du paquet ACK pour obtenir la valeur de cookie ; et
vérifier la validité de la valeur de cookie et acquérir les informations de connexion client lorsque la valeur de cookie passe la vérification.

7. Procédé mis en œuvre par ordinateur permettant d'établir une connexion dans un système d'équilibrage de charge, le procédé étant réalisé par un dispositif d'équilibrage de charge (702) couplé entre un dispositif client (701) et un serveur réel (703) qui fournit un service au dispositif client, le procédé comprenant :
la réception (101) d'un paquet synchrone, SYN, en provenance du dispositif client (701), le paquet SYN comprenant des informations de connexion client ;
sur la base des informations de connexion client, le calcul (102) d'un numéro de série conservant les informations de connexion client ;
l'attribution du numéro de série à un premier paquet d'accusé de réception synchrone, SYN+ACK, pour conserver les informations de connexion de client ;
l'acquisition des informations de connexion du serveur réel par négociation avec le serveur réel (703) ;
l'ajout des informations de connexion acquises du serveur réel (703) au premier paquet SYN+ACK;
après l'ajout des informations de connexion acquises du serveur réel (703), le renvoi (103) du premier paquet SYN+ACK au dispositif client (701) ;
la réception (104) d'un paquet d'accusé de réception, ACK, en provenance du dispositif client (701) et le calcul pour obtenir les informations de connexion client sur la base d'un numéro de confirmation du paquet ACK ;
la génération (105) d'un paquet auto-défini pour comprendre les informations de connexion client ; et
le transfert (106) du paquet auto-défini au serveur réel (703) afin que le serveur réel extraie les informations de connexion client du paquet auto-défini et établisse une connexion TCP avec le dispositif client (701) sur la base des informations de connexion client.

8. Procédé mis en œuvre par ordinateur selon la revendication 7, ladite génération du paquet auto-défini comprenant :
l'ajout d'un identifiant et l'écriture des informations de connexion client dans le paquet ACK renvoyé par le dispositif client (701) pour générer le paquet auto-défini, l'identifiant étant destiné à identifier le paquet auto-défini.

9. Procédé mis en œuvre par ordinateur selon l'une quelconque des revendications 7 à 8, ledit paquet auto-défini étant un paquet SYN auto-défini, ledit paquet SYN auto-défini étant généré par :
la définition d'un numéro de série du paquet SYN auto-défini pour qu'il soit un numéro de série du paquet SYN transmis à partir du dispositif client (701) ;
la définition d'un numéro de série du premier paquet SYN+ACK transmis à partir du dispositif d'équilibrage de charge (702) pour qu'il soit un numéro de confirmation du paquet SYN auto-défini ;
l'écriture des informations de connexion client dans le paquet SYN auto-défini ; et l'ajout d'une adresse du dispositif d'équilibrage de charge au paquet SYN auto-défini.

10. Procédé mis en œuvre par ordinateur selon la revendication 9,
ledit paquet SYN auto-défini étant transféré au serveur réel (703) afin que le serveur réel établisse une connexion TCP semi-ouverte avec le dispositif client (701) sur la base des informations de connexion client comprises dans le paquet SYN auto-défini, et transférer un second paquet SYN+ACK au dispositif d'équilibrage de charge (702) sur la base de l'adresse du dispositif d'équilibrage de charge, un numéro de série du second paquet SYN+ACK étant le numéro de confirmation du paquet SYN auto-défini, et
ledit procédé comprenant en outre, après réception du second paquet SYN+ACK, le transfert du paquet ACK renvoyé à partir du dispositif client (701) au serveur réel (703) afin que le serveur réel convertisse la connexion TCP semi-ouverte en la connexion TCP.

11. Procédé mis en œuvre par ordinateur selon l'une quelconque des revendications 7 à 10,
ledit paquet ACK renvoyé à partir du dispositif client (701) comprenant une demande de données,
ladite génération du paquet auto-défini comprenant l'écriture des informations de connexion client et de la demande de données dans le paquet auto-défini, et
ledit transfert du paquet auto-défini au serveur réel (703) invitant le serveur réel à extraire les informations de connexion client et la demande de données afin que le serveur réel établisse la connexion TCP avec le dispositif client (701) et transfert un paquet de réponse au dispositif client sur la base de la demande de données après l'établissement de la connexion TCP.

12. Procédé mis en œuvre par ordinateur selon l'une quelconque des revendications 7 à 11,
ledit calcul du numéro de série comprenant : l'utilisation d'une fonction de cookie d'une technologie de cookie synchrone pour calculer les informations de connexion client afin d'obtenir une valeur de cookie en tant que numéro de série ; et
ledit calcul pour obtenir les informations de connexion client sur la base du numéro de confirmation du paquet ACK comprenant : le calcul du numéro de confirmation du paquet ACK pour obtenir la valeur de cookie, la vérification de la validité de la valeur de cookie et l'acquisition des informations de connexion client lorsque la valeur de cookie passe la vérification.

13. Support lisible par ordinateur non transitoire qui stocke un ensemble d'instructions qui peut être exécuté par au moins un processeur d'un dispositif pour amener le dispositif à réaliser le procédé selon l'une quelconque des revendications 7 à 12.
